(19) 

Europäisches
Patentamt
European
Patent Office
Office européen
des brevets

(11) **EP 4 715 905 A1**

(12) **EUROPEAN PATENT APPLICATION**
published in accordance with Art. 153(4) EPC

(43) Date of publication:
**25.03.2026 Bulletin 2026/13**

(21) Application number: **24843512.5**

(22) Date of filing: **17.07.2024**

(51) International Patent Classification (IPC):
*H01M 4/525* (2010.01)   *H01M 4/36* (2006.01)
*H01M 10/052* (2010.01)   *C01G 53/00* (2025.01)
*H01M 4/505* (2010.01)   *H01M 4/131* (2010.01)
*H01M 4/02* (2006.01)

(52) Cooperative Patent Classification (CPC):
Y02E 60/10

(86) International application number:
**PCT/KR2024/010314**

(87) International publication number:
**WO 2025/018797 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.07.2023   KR 20230092287
27.07.2023   KR 20230098548
16.07.2024   KR 20240094050
16.07.2024   KR 20240094051**

(71) Applicant: **LG Energy Solution, Ltd.
Seoul 07335 (KR)**

(72) Inventors:
• **KIM, Jong Woo**
 **Daejeon 34122 (KR)**
• **YOO, Tae Gu**
 **Daejeon 34122 (KR)**
• **JU, Ji Young**
 **Daejeon 34122 (KR)**
• **YOO, Seung Su**
 **Daejeon 34122 (KR)**
• **PARK, Byung Chun**
 **Daejeon 34122 (KR)**
• **JO, Chi Ho**
 **Daejeon 34122 (KR)**

(74) Representative: **Hoffmann Eitle
Patent- und Rechtsanwälte PartmbB
Arabellastraße 30
81925 München (DE)**

(54) **POSITIVE ELECTRODE MATERIAL POWDER, AND POSITIVE ELECTRODE AND LITHIUM SECONDARY BATTERY INCLUDING SAME**

(57)    A positive electrode material powder according to the present invention is a positive electrode material powder including a positive electrode active material containing lithium nickel-based oxide particles having a nickel (Ni) content of 50 mol% to 80 mol% among all metals excluding lithium, wherein the lithium nickel-based oxide particles are in the form of a single particle formed of one single nodule, or a quasi-single particle, a composite of up to 30 nodules, and a PCF value indicated by Equation 1 according to the present invention satisfies a range of 2.0 to 3.4.

[FIG. 1]

**EP 4 715 905 A1**

**Description**

**TECHNICAL FIELD**

**Cross-reference to Related Applications**

This application claims the benefit of Korean Patent Application Nos. 10-2023-0092287 filed on 7/17/2023, 10-2023-0098548 filed on 7/27/2023, 10-2024-0094050 filed on 7/16/2024, and 10-2024-0094051 filed on 7/16/2024 in the Korean Intellectual Property Office, the disclosure of which is incorporated herein in its entirety by reference.

**Technical Field**

The present invention relates to a positive electrode material powder, and a positive electrode and a lithium secondary battery which include the same, and more particularly, to a positive electrode material powder having excellent continuous charging characteristics and generating a small amount of fine powder during electrode manufacturing, and a positive electrode and a lithium secondary battery which include the same.

**BACKGROUND ART**

Lithium secondary batteries are typically provided with a positive electrode, a negative electrode, a separator, and an electrolyte, and the positive electrode and the negative electrode include active materials enabling intercalation/deintercalation of lithium ions.

lithium cobalt oxide ($LiCoO_2$), lithium nickel oxide ($LiNiO_2$), lithium manganese oxide ($LiMnO_2$, $LiMnO_4$, or the like), lithium iron phosphate compound ($LiFePO_4$), and the like have been used as a positive electrode active material for lithium secondary batteries. Among those listed above, the lithium cobalt oxide has high operating voltage and excellent capacity characteristics but it is difficult to commercially apply the lithium cobalt oxide to large-capacity batteries because cobalt, which is a raw material of the lithium cobalt oxide, is expensive and unstably supplied. The lithium nickel oxide has poor structural stability and thus is hardly provided with sufficient lifespan. Meanwhile, the lithium manganese oxide has excellent stability but comes with poor capacity. Accordingly, lithium composite transition metal oxides including at least two types of transition metals have been developed to compensate for the limitations of lithium transition metal oxides including Ni, Co, or Mn alone, and particularly, lithium nickel cobalt manganese oxides including Ni, Co, and Mn (hereinafter, simply referred to as 'NCM-based lithium composite transition metal oxide') have been widely used in the field of batteries for electric vehicles.

Meanwhile, typical NCM-based lithium composite transition metal oxides are generally in the form of a spherical secondary particle in which several tens to several hundreds of primary particles are aggregated. However, when the NCM-based lithium composite transition metal oxides in the form of a secondary particle in which a number of primary particles are aggregated are applied, the detachment of primary particles, that is, the breakage of particles, easily takes place in a rolling process in the manufacture of a positive electrode and cracks are generated inside particles in a charging/discharging process. When the breakage or cracking of positive electrode active material particles is caused, a contact area with an electrolyte is increased to increase gas generation and deterioration of active materials, which are caused by side reactions with an electrolyte, and accordingly, lifespan characteristics are degraded.

In order to address the issues described above, there has been proposed a technique of preparing a positive electrode active material in the form of a single particle instead of a secondary particle by increasing a firing temperature in the preparation of NCM-based lithium composite transition metal oxides. The positive electrode active material in the form of a single particle has a smaller contact area with an electrolyte than a typical positive electrode active material in the form of a secondary particle, resulting in less side reactions with an electrolyte, and has excellent particle strength, resulting in less breakage of particles in the manufacture of an electrode. Therefore, when the positive electrode active material in the form of a single particle is used, there are benefits of reduced gas generation and excellent lifespan characteristics.

However, the positive electrode active material in the form of a single particle exhibit lower lithium mobility due to limited interfacial area between primary particles, which serve as the migration path for lithium ions within the particle. Consequently, this results in reduced capacity compared to the positive electrode active material in the form of a secondary particle.

Increasing driving voltage is one approach to enhance the capacity of the positive electrode active material in the form of a single particle but NCM-based lithium composite transition metal oxides exhibit an increase in side reactions with an electrolyte at a driving voltage of 4.3 V or more, particularly 4.35 V or more, elution of transition metal ions, and phase transition of crystal structure, causing rapid degradation in battery performance.

In particular, the increase in side reactions with an electrolyte at a voltage of 4.35 V or more is mainly attributed to an increase in generation of fine powder due to particle breakage during electrode manufacturing, but the positive electrode active material in the form of a single particle alone is not capable enough to sufficiently suppress the generation of fine powder.

Therefore, the development of positive electrode material powder exhibiting high-voltage stability during operation, low fine powder generation during rolling, and excellent continuous charging characteristics is called for.

## DISCLOSURE OF THE INVENTION

### TECHNICAL PROBLEM

The present invention is designed to overcome the limitations described above, and thus, an aspect of the present invention provides a positive electrode material powder with controlled powder properties for reduced fine powder generation during rolling.

Another aspect of the present invention provides a positive electrode and a lithium secondary battery which include the positive electrode material powder described above.

### TECHNICAL SOLUTION

According to an aspect of the present invention, provided is a positive electrode material powder including a positive electrode active material containing lithium nickel-based oxide particles having a nickel (Ni) content of 50 mol% to 80 mol% among all metals excluding lithium, wherein the lithium nickel-based oxide particles are in the form of a single particle formed of one single nodule, or a quasi-single particle, a composite of up to 30 nodules, and a PCF value indicated by Equation 1 below satisfies a range of 2.0 to 3.4.

$$\text{Equation 1:}$$

$$particle\ cracking\ factor\ (PCF) = \frac{S_{BET} \text{x} P_0 \text{x} (D_{50}\text{-}D_{\min})}{D_{\max}\text{-}D_{50}}$$

In Equation 1 above, the $S_{BET}$ is a BET specific surface area (unit: m²/g) of the positive electrode material powder, the $P_0$ is an intensity of maximum peak (vol%) in particle size distribution of the positive electrode material powder measured using a laser diffraction method, the $D_{50}$ is a particle size at 50% cumulative volume in particle size distribution of the positive electrode material powder, the $D_{\min}$ is a minimum particle size in particle size distribution of the positive electrode material powder, and the $D_{\max}$ is a maximum particle size in particle size distribution of the positive electrode material powder.

The lithium nickel-based oxide particles may be represented by Formula 1 below.

[Formula 1]     $Li_aNi_bCo_cMn_dM^1_eO_2$

In Formula 1 above, $M^1$ may be at least one selected from the group consisting of Ti, Mg, Al, Zr, Y, Ba, Ca, Sr, W, Ta, Nb, and Mo, where $0.8 \le a \le 1.2$, $0.5 \le b \le 0.8$, $0 < c \le 0.3$, $0 < d \le 0.4$, and $0 \le e \le 0.2$.

The positive electrode material powder may have a BET surface area of 0.2 m²/g to 1.3 m²/g.

The positive electrode material powder may have a $P_0$ of 8 or greater.

The positive electrode material powder may have a $D_{50}$ of 1 μm to 10 μm.

The positive electrode material powder may have a $D_{\min}$ of 0.75 μm to 2.0 μm.

The positive electrode material powder may have a $D_{\max}$ of 8 μm to 18 μm.

The positive electrode material powder may have an SP value, indicated by Equation 2 below, of 0.20 to 0.33.

$$\text{Equation 2:}$$

$$SP = \frac{D_{50}\text{-}D_{\min}}{D_{\max}\text{-}D_{50}}$$

The positive electrode material powder may have a PCF value of 2.5 to 3.2.

A generation rate of fine powder having a particle size of 1 μm or less may be 3 vol% or less when the positive electrode material powder is pressed at 9 tons.

According to another aspect of the present invention, provided is a positive electrode including the positive electrode material powder described above.

According to another aspect of the present invention, provided is a lithium secondary battery including the positive electrode, a negative electrode, a separator sandwiched between the positive electrode and the negative electrode, and an electrolyte.

The lithium secondary battery may have a charge cut-off voltage of 4.35 V or more during operation.

## ADVANTAGEOUS EFFECTS

A positive electrode material powder according to the present invention presents PCF values satisfying the range of the present invention. A positive electrode to which a positive electrode material powder whose PCF is outside the range of the present invention is applied fails to have an appropriate BET specific surface area of a positive electrode active material and an appropriate value of particle size distribution, resulting in increased particle breakage during positive electrode rolling, and reduced continuous charging characteristics due to increased side reactions with an electrolyte during high-voltage operation. In contrast, a positive electrode material powder whose PCF satisfies the range of the present invention exhibits less particle breakage during positive electrode rolling, and thus has reduced side reactions with an electrolyte during high-voltage operation, resulting in excellent continuous charging characteristics.

## BRIEF DESCRIPTION OF THE DRAWINGS

FIG. 1 is a graph showing particle size distribution (PSD) of a positive electrode material powder prepared in Example 1 according to Experimental Examples 1 and 2;

FIG. 2 is a graph showing particle size distribution (PSD) of a positive electrode material powder prepared in Comparative Example 2 according to Experimental Examples 1 and 2;

FIG. 3 is a graph showing evaluation results on leakage current during continuous charging according to Experimental Example 3;

FIG. 4 is a graph showing only the current from the graph of FIG. 3; and

FIG. 5 is a graph showing only the voltage from the graph of FIG. 3.

## MODE FOR CARRYING OUT THE INVENTION

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

As used herein, the term "single particle" indicates a particle consisting of a single nodule. As used herein, the term "quasi-single particle" indicates a composite particle formed of up to 30 nodules.

As used herein, the term "nodule" indicates a particle unit body constituting a single particle and a quasi-single particle, and the nodule may be a single crystal lacking any crystalline grain boundary, or may be a polycrystal in which grain boundaries are not present when observed in a field of view of $5000\times$ to $20000\times$ using a scanning electron microscope (SEM). As used herein, an average particle diameter of the nodule may be determined as an arithmetic average value of particle diameters of each nodule measured using scanning electron microscope (SEM).

As used herein, the term "secondary particle" indicates a particle formed by aggregation of several tens to several hundreds of primary particles. More specifically, the secondary particle is an aggregate of 50 primary particles or more.

As used herein, when the term "particle" is described, any one or all of a single particle, a quasi-single particle, a primary particle, a nodule, and a secondary particle may be encompassed.

As used herein, a "specific surface area" is measured through a BET method, and specifically may be calculated from an amount of nitrogen gas adsorbed at a liquid nitrogen temperature (77 K) using BELSORP-mini II from BEL JAPAN, INC.

As used herein, "$P_0$", "$D_{min}$", "$D_{50}$", and "$D_{max}$" are particle size values of particle size distribution of positive electrode active material powder measured using a laser diffraction method. Specifically, the $P_0$ is an intensity of maximum peak (vol%) in particle size distribution of the positive electrode material powder, the $D_{min}$ is a minimum particle size in particle size distribution of the positive electrode material powder, the $D_{50}$ is a particle size at 50% cumulative volume in particle size distribution of the positive electrode material powder, and the $D_{max}$ is a maximum particle size in particle size distribution of the positive electrode material powder. The particle size values of particle size distribution, for example, may be measured in a way that a positive electrode active material powder is dispersed in a dispersion medium, the resulting product is introduced into a commercial laser diffraction particle size measurement instrument (e.g., Microtrac MT 3000) and irradiated with ultrasonic waves having a frequency of about 28 kHz and an output of 60 W to obtain a graph of particle size distribution.

The inventors of the present invention have conducted repeated studies to develop a positive electrode material powder for a lithium secondary battery exhibiting less particle breakage during electrode rolling and excellent continuous charging characteristics, and thus have found that when powder characteristics of the positive electrode material powder satisfy a specific relationship, particle breakage during rolling is reduced and side reactions with an electrolyte are minimized, resulting in excellent battery characteristics at high voltage, thereby completing the present invention.

## Positive electrode material powder

Hereinafter, a positive electrode material powder according to the present invention will be described.

Specifically, a positive electrode material powder according to the present invention is a positive electrode material powder including a positive electrode active material containing lithium nickel-based oxide particles having a nickel (Ni) content of 50 mol% to 80 mol% among all metals excluding lithium, wherein the lithium nickel-based oxide particles are in the form of a single particle formed of one single nodule or a quasi-single particle, a composite of up to 30 nodules, and a PCF value indicated by Equation 1 below satisfies a range of 2.0 to 3.4.

Equation 1:

$$particle\ cracking\ factor\ (PCF) = \frac{S_{BET} \times P_0 \times (D_{50} - D_{min})}{D_{max} - D_{50}}$$

In Equation 1 above, the $S_{BET}$ is a BET specific surface area (unit: $m^2/g$) of the positive electrode material powder, the $P_0$ is an intensity of maximum peak (vol%) in particle size distribution of the positive electrode material powder measured using a laser diffraction method, the $D_{50}$ is a particle size at 50% cumulative volume in particle size distribution of the positive electrode material powder, the $D_{min}$ is a minimum particle size in particle size distribution of the positive electrode material powder, and the $D_{max}$ is a maximum particle size in particle size distribution of the positive electrode material powder.

Lithium nickel-based oxide particles in the form of a single particle, which were typical used as positive electrode material powder, exhibited reduced particle breakage during rolling, but the reduction was not sufficient enough to fully suppress side reactions with an electrolyte at high voltage.

To overcome the limitations, the inventors of the present invention have conducted repeated studies and thus have found that controlling a PCF value of positive electrode material powder within a certain range reduces particle breakage during positive electrode rolling and reduces side reactions with an electrolyte, resulting in improved continuous charging characteristics, thereby completing the present invention.

The PCF value is a combination of a BET specific surface area of the positive electrode material powder and a particle size value of particle size distribution of the positive electrode material powder, measured using a laser diffraction method. An appropriate combination of the BET specific surface area and the particle size value of the positive electrode material powder is required to achieve the superior effects intended by the present invention.

Specifically, even when the BET surface area of the positive electrode material powder satisfies a certain range, failure to adjust the particle size values within the PCF range disenables adequate prevention of particle breakage during rolling. In addition, conversely, even when the particle size values satisfy a certain range, failure to adjust the BET surface area of the positive electrode material powder within the PCF range disenables adequate prevention of particle breakage during rolling.

More specifically, the PCF is a parameter composed of $P_0$, $D_{min}$, $D_{50}$, and $D_{max}$ measured from the particle size distribution of the positive electrode material powder using a laser diffraction method, and $S_{BET}$ (unit: $m^2/g$), which is the BET surface area of the positive electrode material powder, and is indicated as in Equation 1 above. The PCF may be 2.0 to 3.4, preferably 2.15 to 3.35, more preferably 2.4 to 3.3, and even more preferably 2.5 to 3.2. When the PCF value is less than 2.0, the $S_{BET}$ is excessively low, the particle size distribution is excessively wide from side to side, or the particle size distribution of large particles formed by the aggregation of multiple single particles or quasi-single particles is excessively wide. In these conditions, the large particles formed by the aggregation of multiple single particles or quasi-single particles are highly likely to be broken by rolling, and thus, side reactions between a positive electrode active material and an electrolyte increase during continuous charging. When the PCF value is greater than 3.4, the $S_{BET}$ is excessively high, the particle size distribution is excessively narrow from side to side, or the particle size distribution of small particles in the form of a single particle or a quasi-single particle is excessively wide. In these conditions, friction between particles is intensified during electrode rolling, resulting in reduced rolling characteristics and increased particle breakage by rolling. In particular, even when a coating layer is formed to suppress side reactions with an electrolyte and stabilize a surface of a positive electrode active material, due to particle breakage, an unstable surface is newly formed. When the unstable surface is newly formed as described above, side reactions between a positive electrode active material and an electrolyte increase, resulting in reduced lifespan and continuous charging characteristics of batteries. Hence, when the PCF satisfies the above range, the breakage of particles with 1 $\mu$m or less during electrode rolling is reduced, resulting in reduced side reaction with an electrolyte, thereby improving lifespan characteristics and continuous charging characteristics.

Meanwhile, the BET surface area value and particle size values of the positive electrode material powder satisfying the PCF range described above may be controlled through various methods, but preferably, it may be achieved by controlling the Ni content in lithium nickel-based oxide particles, the composition of lithium nickel-based oxide particles, the temperature and time conditions during firing of positive electrode active material precursors and lithium sources, the firing temperature and time during forming a coating layer on positive electrode active materials, and the grinding conditions of the positive electrode material powder.

In addition, the positive electrode active material particles according to the present invention may be a single particle consisting of one nodule and/or a quasi-single particle which is a composite of up to 30 nodules, preferably 2 to 20 nodules, more preferably 2 to 10 nodules, or a form including both the single particle and the quasi-single particle. Preferably, the positive electrode material powder according to the present invention may be composed of a combination of positive electrode active material particles in the form of a single particle and a quasi-single particle. When the number of nodules constituting positive electrode active material particles is greater than 30, particle breakage increases during electrode manufacturing, and internal cracks are caused due to volume expansion/contraction of nodules during charge/discharge, which may reduce the effect of improving high-temperature lifespan characteristics and high-temperature storage characteristics.

Meanwhile, the lithium nickel-based oxide particles may have a composition represented by Formula 1 below.

$$[\text{Formula 1}] \qquad Li_aNi_bCo_cMn_dM^1_eO_2$$

In Formula 1 above, $M^1$ may be at least one selected from the group consisting of Ti, Mg, Al, Zr, Y, Ba, Ca, Sr, W, Ta, Nb, and Mo, where $0.8 \leq a \leq 1.2$, $0.5 \leq b \leq 0.8$, $0 < c \leq 0.3$, $0 < d \leq 0.3$, and $0 \leq e \leq 0.2$. When the mole ratio of lithium satisfies the above range, a stable layered crystal structure may be formed.

a above represents a mole ratio of lithium in lithium composite transition metal oxide particles, where $0.8 \leq a \leq 1.2$, $0.9 \leq a \leq 1.1$, or $0.95 \leq a \leq 1.10$. When the mole ratio of lithium satisfies the above range, a stable layered crystal structure may be formed.

b above represents a mole ratio of nickel among all metals excluding lithium in lithium composite transition metal oxide particles, where $0.5 \leq b \leq 0.8$, $0.50 \leq b \leq 0.75$, $0.55 \leq b \leq 0.70$, or $0.55 \leq b \leq 0.65$. Since a higher nickel content among transition metals enables a higher capacity, a nickel content of 0.5 or greater is more favorable for achieving a high capacity.

c above represents a mole ratio of cobalt among all metals excluding lithium in lithium nickel-based oxide, where $0 < c \leq 0.3$, $0 < c \leq 0.25$, $0 < c \leq 0.2$, $0 < c \leq 0.15$, or $0 < c \leq 0.1$. When the molar ratio of cobalt satisfies the above range, good resistance characteristics and output characteristics are achievable.

d above represents a mole ratio of manganese among all metals excluding lithium in lithium nickel-based oxide, where $0 < d \leq 0.4$, $0.1 \leq d \leq 0.4$, $0.15 \leq d \leq 0.4$, or $0.2 < d \leq 0.4$. When the molar ratio of manganese satisfies the above range, a positive electrode active material may show excellent structural stability.

e above represents a mole ratio of $M^1$ element among all metals excluding lithium in lithium nickel-based oxide, where the $M^1$ is a doping element substituted at a transition metal site, and $0 \leq e \leq 0.20$, $0 \leq e \leq 0.15$, or $0 \leq e \leq 0.10$. When an appropriate amount of the $M^1$ is included, it may serve to promote particle growth during firing or enhance crystal structure stability.

Meanwhile, the positive electrode material powder may have a BET specific surface area of 0.2 $m^2$/g to 1.3 $m^2$/g, preferably 0.3 $m^2$/g to 1.0 $m^2$/g, more preferably 0.4 $m^2$/g to 0.9 $m^2$/g, and even more preferably 0.5 $m^2$/g to 0.85 $m^2$/g. When the positive electrode material powder satisfies the BET specific surface area range described above, the rolling characteristics of an electrode may be improved, and particle breakage may be reduced, thereby suppressing side reactions with an electrolyte.

Meanwhile, the $P_0$ is an intensity of maximum peak (vol%) in cumulative volume particle size distribution of the positive electrode material powder measured using a laser diffraction method, and the $P_0$ may be 8 or greater, preferably 9 or greater, and more preferably 10 or greater. When the $P_0$ satisfies the above range, it may have an appropriate form of particle size distribution, resulting in reduced particle breakage and an appropriate electrode density.

Meanwhile, the $D_{50}$ is an average particle size in cumulative volume particle size distribution of the positive electrode material powder measured using a laser diffraction method, and the $D_{50}$ may be in a range of 1 μm to 10 μm, preferably 2 μm to 8 μm, more preferably 3 μm to 7 μm, and even more preferably 3 μm to 5 μm. When the above range is satisfied, excellent processability in electrode manufacturing may be achieved, enhanced electrolyte impregnation may increase electrochemical properties, and reduced resistance and improved output characteristics may be obtained.

Meanwhile, the $D_{min}$ is a minimum particle size in particle size distribution of the positive electrode material powder measured using a laser diffraction method, and the $D_{min}$ may be in a range of 0.75 μm to 2.0 μm, preferably 0.8 μm to 1.5 μm, and more preferably 0.9 μm to 1.4 μm. When the $D_{min}$ satisfies the above range, friction between particles is not significant, resulting in excellent rolling characteristics, small particles may effectively fill pores between large particles, resulting in so excellent electrode density, and particle breakage may be reduced, resulting in reduced side reactions between a positive active material and an electrolyte.

Meanwhile, the $D_{max}$ is a maximum particle size in particle size distribution of the positive electrode material powder measured using a laser diffraction method, and the $D_{max}$ may be in a range of 8 μm to 18 μm, preferably 9 μm to 16 μm, and more preferably 10 μm to 14 μm. When the $D_{max}$ satisfies the above range, an appropriate particle size distribution graph may be formed, small particles may effectively fill pores between large particles during electrode rolling, resulting in so excellent electrode density, and particle breakage may be reduced, resulting in reduced side reactions between a positive active material and an electrolyte.

Meanwhile, the positive electrode material powder may have an SP value, indicated by Formula 2 below, of 0.20 to 0.33.

Equation 2:

$$SP = \frac{D_{50} - D_{min}}{D_{max} - D_{50}}$$

The SP value indicated by Equation 2 above may be preferably 0.23 to 0.33, more preferably 2.5 to 0.32. When the SP value indicated by Equation 2 above satisfies the above range, an appropriate particle size distribution graph may be formed, and thus particle breakage may be reduced, resulting in reduced side reactions with an electrolyte at high voltage.

Meanwhile, when the positive electrode material powder is pressed at 9 tons, the generation rate of fine powder having a particle size of 1 μm or less may be 3 vol% or less, preferably 2.8 vol% or less, more preferably 2.5 vol% or less, and even more preferably 2 vol% or less. The side reactions in the surface of the positive electrode active material are mainly caused by the generation of fine powder of a positive electrode active material, and accordingly, when a large amount of fine powder having a particle size of 1 μm or less is generated, side reactions with an electrolyte may increase, severely affecting lifespan characteristics and continuous charging characteristics.

**Positive electrode**

Next, a positive electrode according to the present invention will be described.

The positive electrode according to the present invention includes the positive electrode material powder according to the present invention described above. Specifically, the positive electrode includes a positive electrode current collector and a positive electrode active material layer formed on the positive electrode current collector, and the positive electrode active material layer includes the positive electrode material powder according to the present invention. Since the positive electrode material powder has been described above, the detailed description thereof will be skipped, and hereinafter, other components will only be described.

The positive electrode current collector may include a highly conductive metal and is not particularly limited as long as the positive electrode active material layer easily adheres thereto and the positive electrode current collector has no reactivity in the voltage range of a battery. As the positive electrode current collector, for example, stainless steel, aluminum, nickel, titanium, thermally treated carbon, aluminum or stainless steel whose surface has been treated with carbon, nickel, titanium, silver, or the like may be used. In addition, the positive electrode current collector may typically have a thickness of 3 μm to 500 μm, and fine irregularities may be formed on a surface of the current collector to improve the adhesion of a positive electrode active material. For example, the positive electrode current collector may be used in various forms such as a film, a sheet, a foil, a net, a porous body, a foam body, and a non-woven fabric body.

The positive electrode active material layer may optionally include a conductive material and a binder in addition to the positive electrode material powder, as necessary.

In this case, the positive electrode material powder may be included in an amount of 80 wt% to 99 wt%, more specifically 90 wt% to 98 wt%, with respect to the total weight of the positive electrode active material layer.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fibers; metal powder or metal fiber such as copper, nickel, aluminum, and silver; conductive tubes such as carbon nanotubes; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.01 wt% to 10 wt%, preferably 0.1 wt% to 9 wt%, more preferably 0.1 wt% to 5 wt%, with respect to the total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber (SBR), fluorine rubber, polyacrylic acid, and a polymer obtained by substituting hydrogen of the above materials with Li, Na, or Ca, or various copolymers, and any one thereof or a mixture of two or more thereof may be used. The binder may be included in an amount of 1 wt% to 30 wt%, preferably 1 wt% to 20 wt%, more preferably 1 wt% to 10 wt%, with respect to the total weight of the positive electrode active material layer.

The positive electrode may be prepared according to a typical method of preparing a positive electrode, except that the positive electrode material powder described above is used. Specifically, a positive electrode slurry composition prepared by dissolving or dispersing the positive electrode material powder and, if necessary, optionally dissolving or dispersing a binder, a conductive material, and a dispersant in a solvent, is applied onto the positive electrode current collector, and then dried and rolled to prepare the positive electrode.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent may dissolve or disperse the positive electrode active material, the conductive material, the binder, and the dispersant in consideration of the applying thickness of the slurry and preparation yield, and thereafter, have a viscosity which may exhibit excellent thickness uniformity upon application for the preparation of the positive electrode.

In addition, in another method, the positive electrode may be prepared by casting the positive electrode slurry composition on a separate support and then laminating a film separated from the support on the positive electrode current collector.

### Lithium secondary battery

Next, a lithium secondary battery according to the present invention will be described.

Specifically, the lithium secondary battery includes a positive electrode, a negative electrode positioned to face the positive electrode, a separator sandwiched between the positive electrode and the negative electrode, and an electrolyte. The positive electrode is the same as that described above, and thus, a detailed description thereof will be skipped, and hereinafter, other components will only be described.

In addition, the lithium secondary battery may optionally further include a battery case for accommodating an electrode assembly composed of the positive electrode, the negative electrode, and the separator, and a sealing member for sealing the battery case.

In the lithium secondary battery, the negative electrode includes a negative electrode current collector and a negative electrode active material layer positioned on the negative electrode current collector.

The negative electrode current collector is not particularly limited as long as it has a high conductivity without causing chemical changes in batteries. For example, copper, stainless steel, aluminum, nickel, titanium, heat treated carbon, copper or stainless steel that is surface-treated with one of carbon, nickel, titanium, silver, and the like, an aluminum-cadmium alloy, and the like may be used. In addition, the negative electrode current collector may typically have a thickness of 3 $\mu$m to 500 $\mu$m, and as in the case of the positive electrode current collector, fine irregularities may be formed on a surface of the negative electrode current collector to improve the adhesion of the negative electrode active material. For example, the negative electrode current collector may be used in various forms such as a film, a sheet, a foil, a net, a porous body, a foam body, and a non-woven fabric body.

The negative electrode active material layer optionally includes a binder and a conductive material in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic material alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and dedoped with lithium such as $SiO_\beta$ ($0<\beta<2$), $SnO_2$, vanadium oxide, and lithium vanadium oxide; or a composite including the metallic material and the carbonaceous material such as a Si-C composite or a Sn-C composite, and any one thereof or a mixture of two or more thereof may be used. In addition, a metallic lithium thin film may be used as the negative electrode active material. In addition, as a carbon material, low-crystalline carbon, high-crystalline carbon, and the like may all be used. Typical examples of the low-crystalline carbon may be soft carbon and hard carbon, and typical examples of the high-crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature heat treated carbon such as petroleum or coal tar pitch derived cokes.

The negative electrode active material may be included in an amount of 80 wt% to 99 wt%, 82 wt% to 99 wt%, or 84 wt% to 99 wt%, with respect to the total weight of the negative electrode active material layer.

The binder is a component that assists in the binding between the conductive agent, the active material, and the current collector, and is commonly added in an amount of 0.1 wt% to 10 wt% with respect to the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive material is a component for further improving conductivity of the negative electrode active material, and may be included in an amount of 1 wt% to 30 wt%, 1 wt% to 20 wt%, or 1 wt% to 10 wt%, with respect to the total weight of the negative electrode active material layer. Such conductive material is not particularly limited as long as it has conductivity without causing chemical changes in the battery, and for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; carbon fluoride powder; metal powder such as aluminum powder, and nickel powder; conductive whiskers such as zinc oxide whiskers and potassium titanate whiskers; conductive metal oxide such as titanium oxide; or polyphenylene derivatives, or the like may be used.

The negative electrode active material layer may be prepared by applying a negative electrode slurry composition, which is prepared by dissolving or dispersing a negative electrode active material and optionally a binder and a conductive material in a solvent, on a negative electrode current collector and drying the resulting product, or may be prepared by casting the negative electrode slurry composition on a separate support and then laminating a film separated from the support on the negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

Any compound may be used as the lithium salt without particular limitation as long as it is a compound capable of providing lithium ions used in lithium secondary batteries. To be specific, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$ $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used. The lithium salt may be used in a concentration range of 0.1 M to 4.0 M, preferably 0.5 M to 3.0 M, more preferably 1.0 M to 2.0 M. When the concentration of the lithium salt is included within the above range, the electrolyte has suitable conductivity and viscosity and may thus exhibit excellent performance, and lithium ions may effectively move.

In addition to the above-described electrolyte components, one or more types of additives such as a haloalkylene carbonate-based compound such as difluoroethylene carbonate, pyridine, triethylphosphite, triethanolamine, a cyclic ether, ethylenediamine, n-glyme, hexaphosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, and aluminum trichloride may be further included in the electrolyte for the purpose of enhancing the lifespan characteristics of batteries, suppressing reduction in battery capacity, enhancing the discharge capacity of batteries, and the like. In this case, the additive may be included in an amount of 0.1 wt% to 10.0 wt% with respect to a total weight of the electrolyte.

The lithium secondary battery according to the present invention as described above has excellent stability and electrochemical performance even at high voltage, and thus has a charge cut-off voltage of 4.35 V or more during operation, and may exhibit excellent high-capacity characteristics when operated at such a high voltage, compared to typical lithium secondary batteries. The lithium secondary battery according to the present invention may have a driving voltage of 2.0 V to 4.5 V, preferably 2.0 V to 4.0 V.

In addition, the lithium secondary battery according to the present invention as describe above stably exhibits excellent discharging capacity, output properties, and capacity retention, and thus, are useful for portable devices such as a mobile phone, a notebook computer, and a digital camera, and in the field of electric cars such as a hybrid electric vehicle (HEV).

Therefore, according to another embodiment of the present invention, a battery module including the lithium secondary battery as a unit cell, and a battery pack including the same are provided.

The battery module or the battery pack may be used as a power source of at least any one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be performed by a person with ordinary skill in the art to which the present invention pertains. The present invention may, however, be embodied in many different forms, and is not limited to Examples set forth herein.

Hereinafter, the present invention will be described in more detail through specific embodiments.

**Example 1**

**<Preparation of precursor>**

4 L of distilled water was added into a co-precipitation reactor (capacity: 20 L) and kept at 50 °C in a nitrogen atmosphere while 100 mL of a 28 wt% ammonia aqueous solution was added, and then a 3.2 mol/L transition metal solution in which $NiSO_4$, $CoSO_4$, and $MnSO_4$ were mixed at a molar ratio of nickel: cobalt: manganese of 0.6:0.1:0.3 was continuously added into the reactor at 30 mL/hr, along with the 28 wt% ammonia aqueous solution at 42 mL/hr. The mixture was stirred with an impeller at 400 rpm, and a 40 wt% sodium hydroxide solution was added to maintain the pH of the reaction solution at 9.0, and a co-precipitation reaction was performed for 24 hours to form precursor particles.

The precursor particles were separated and washed, and then dried in an oven at 130 °C to produce a precursor.

<Preparation of positive electrode material powder>

The precursor for the positive electrode active material, prepared as described above was mixed with LiOH at a molar ratio of (Ni+Co+Mn):Li of 1:1.05, and then the mixture was fired at 940 °C for 20 hours to prepare a positive electrode material powder.

Thereafter, the positive electrode material powder was coarsely crushed once using a jaw crusher at a rotation speed of 200 rpm, and then crushed once in a jet mill under conditions of 10 bar gas pressure and 350 m/s gas velocity, and dry-pulverized to a size of 4 $\mu$m. The prepared positive electrode material powder had a composition of Li[Ni$_{0.6}$Co$_{0.1}$Mn$_{0.3}$]O$_2$).

Thereafter, the positive electrode material powder, Al$_2$O$_3$, and WO$_3$ were mixed at a molar ratio of the positive electrode material powder:Al:W of 100:0.3:0.1, and then fired at 450 °C for 5 hours to prepare a positive electrode material powder having Al and W coating layers formed thereon.

**Example 2**

A positive electrode material powder was prepared in the same manner as in Example 1, except that the positive electrode material powder, Al$_2$O$_3$, and WO$_3$ were mixed and then fired at 550 °C for 5 hours to form a coating layer.

**Example 3**

A positive electrode material powder was prepared in the same manner as in Example 1, except that the precursor for a positive electrode active material was mixed with LiOH and then fired at 930 °C for 20 hours.

**Comparative Example 1**

A positive electrode material powder was prepared in the same manner as in Example 1, except that the positive electrode material powder was coarsely crushed once using a jaw crusher at a rotation speed of 200 rpm and then crushed three times using a pin mill at a rotation speed of 10000 rpm.

**Comparative Example 2**

A positive electrode material powder was prepared in the same manner as in Example 1, except that the precursor for a positive electrode active material was mixed with LiOH and then fired at 930 °C for 20 hours to prepare a positive electrode material powder, and then the positive electrode material powder was coarsely crushed once using a jaw crusher at a rotation speed of 200 rpm and then crushed three times using a pin mill at a rotation speed of 10000 rpm.

**Comparative Example 3**

A positive electrode material powder was prepared in the same manner as in Example 1, except that the positive electrode material powder was coarsely crushed once using a jaw crusher at a rotation speed of 200 rpm and then crushed four times using a pin mill at a rotation speed of 10000 rpm.

**Comparative Example 4**

A positive electrode material powder was prepared in the same manner as in Example 1, except that the precursor for a positive electrode active material was mixed with LiOH and then fired at 930 °C for 20 hours to prepare a positive electrode material powder, and then the positive electrode material powder was coarsely crushed once using a jaw crusher at a rotation speed of 200 rpm and then crushed four times using a pin mill at a rotation speed of 10000 rpm.

**Experimental Example 1: Measurement of particle size distribution and BET specific surface area**

Particle size distribution (PSD) of the positive electrode material powders prepared in Examples 1 to 3 and Comparative Examples 1 to 4 was measured, and $P_0$, $D_{min}$, $D_{50}$, and $D_{max}$ according to the particle size distribution are shown in Table 1 below.

In addition, 3 g of the positive electrode material powders prepared in Examples 1 to 3 and Comparative Examples 1 to 4 were collected and measured through a BET method using BELSORP-mini II, and the measurement results are shown in Table 1 below.

In addition, PCF values obtained using the above-described method are shown in Table 1 below.

[Table 1]

| | Example 1 | Example 2 | Example 3 | Comparative Example 1 | Comparative Example 2 | Comparative Example 3 | Comparative Example 4 |
|---|---|---|---|---|---|---|---|
| $P_0$ (vol%) | 10.03 | 11.17 | 12.19 | 8.09 | 6.58 | 11.52 | 12.48 |
| $D_{50}$ (μm) | 3.91 | 4.09 | 3.53 | 3.8 | 3.37 | 3.82 | 3.65 |
| $D_{min}$ (μm) | 0.972 | 1.375 | 1.375 | 0.7 | 0.486 | 0.68 | 0.68 |
| $D_{max}$ (μm) | 13.08 | 13.08 | 11 | 14.5 | 18.5 | 13.08 | 13.08 |
| BET (m²/g) | 0.86 | 0.65 | 0.85 | 0.8 | 0.88 | 0.88 | 1.01 |
| PCF | 2.76 | 2.19 | 2.99 | 1.88 | 1.10 | 3.44 | 3.97 |

**Experimental Example 2: Measurement of particle breakage**

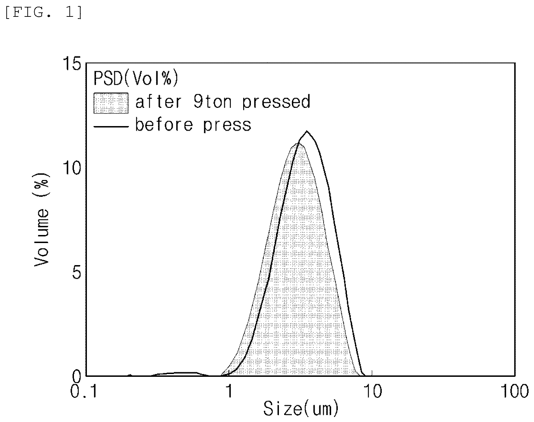

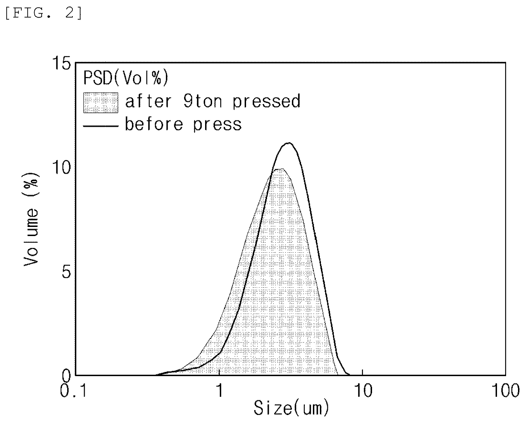

5 g of the positive electrode material powders prepared in Examples 1 to 3 and Comparative Examples 1 to 4 were placed in a cylindrical metal mold having a diameter of 1.2 cm, pressed with a pressure of 9 tons, and then particle size distribution (PSD) was measured to determine a generation rate of fine powder having a particle size of 1 μm or less. The particle size distribution was measured using S-3500 from Microtrac, and the generation rate of fine powder having a particle size of 1 μm or less was converted into vol% with respect to a total weight of the positive electrode material powder. Among the measured particle size distributions (PSD), graphs showing the particle size distributions before and after the 9-ton pressure press for Example 1 and Comparative Example 2 are shown in FIGS. 1 and 2, respectively, and the generation rate of fine powder having a particle size of 1 μm or less for Examples 1 to 3 and Comparative Examples 1 to 4 is shown in Table 2.

[Table 2]

| | Example 1 | Example 2 | Example 3 | Comparative Example 1 | Comparative Example 2 | Comparative Example 3 | Comparative Example 4 |
|---|---|---|---|---|---|---|---|
| Generation rate of fine powder with 1 μm or less ( vol%) | 1.86 | 2.79 | 0.07 | 3.85 | 8.63 | 4.54 | 3.33 |

Table 2 shows that the positive electrode material powders of Examples 1 to 3 whose PCF values satisfy the range of the present invention have significantly reduced generation of fine powder when pressed at a pressure of 9 tons compared to the positive electrode material powders prepared in Comparative Examples 1 to 4.

**Experimental Example 3: Evaluation of continuous charging characteristics**

The positive electrode material powder, a conductive material (carbon black), and a binder (PVDF) of each of Examples 1 to 3 and Comparative Examples 1 to 4 were mixed in a weight ratio of 95:2:3 in N-methylpyrrolidone to prepare a positive electrode slurry containing the positive electrode material powder of each of Examples 1 to 3 and Comparative Examples 1 to 4. The positive electrode slurry was applied onto one surface of an aluminum current collector, dried at 160 °C, and then roll-pressed to prepare a positive electrode.

Lithium metal was used as a negative electrode.

A polyethylene separator was placed between the positive electrode and the negative electrode to prepare an electrode assembly, and the electrode assembly was placed inside a battery case. Thereafter, an electrolyte solution was injected into the case to manufacture a half cell. The electrolyte solution was prepared by dissolving $LiPF_6$ at a concentration of 1 M in an organic solvent in which ethylene carbonate, ethyl methyl carbonate, and diethyl carbonate were mixed in a volume ratio of 3:4:3.

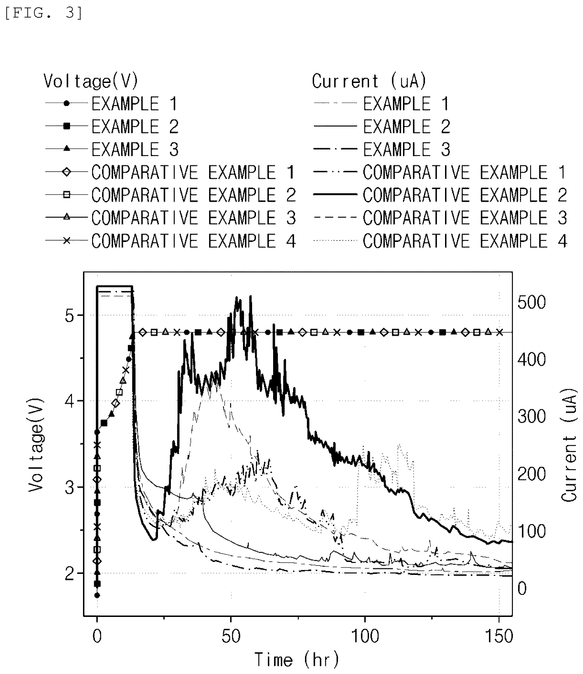

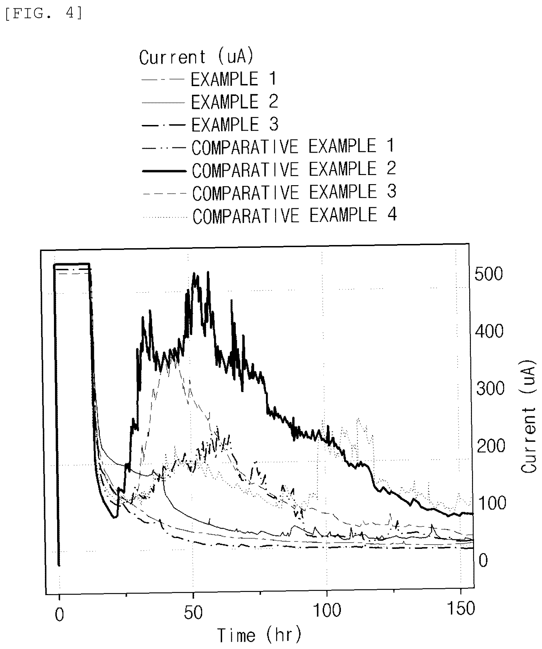

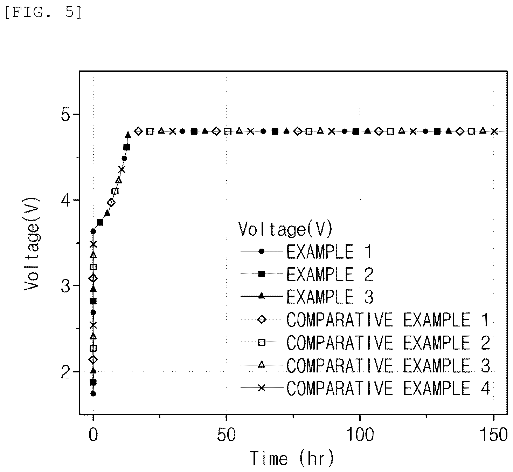

Each half cell battery manufactured above was charged up to a high voltage of 4.8 V at a constant current of 0.1 C at 60 °C, and the current was measured after the constant voltage was applied. The measurement results are presented in FIG. 3. In addition, in the graph of FIG. 3, only the current is shown in FIG. 4 and only the voltage is shown in FIG. 5.

FIGS. 3 and 4 show that the half-cell batteries using the positive electrode material powders of Examples 1 to 3 have reduced particle breakage compared to the half-cell batteries using the positive electrode material powders of Comparative Examples, resulting in reduced side reactions between a positive electrode active material and an electrolyte, and accordingly, leakage current is reduced during continuous charging, leading to excellent continuous charging results.

**Claims**

1. A positive electrode material powder comprising a positive electrode active material comprising lithium nickel-based oxide particles having a nickel (Ni) content of 50 mol% to 80 mol% among all metals excluding lithium,

   wherein the lithium nickel-based oxide particles are in the form of a single particle formed of one single nodule, or a quasi-single particle, a composite of up to 30 nodules,
   a PCF value indicated by Equation 1 below satisfies a range of 2.0 to 3.4,

   Equation 1:

   $$particle\ cracking\ factor\ (PCF) = \frac{S_{BET} \times P_0 \times (D_{50} - D_{min})}{D_{max} - D_{50}}$$

   wherein in Equation 1 above, the $S_{BET}$ is a BET specific surface area (unit: $m^2/g$) of the positive electrode material powder,
   the $P_0$ is an intensity of maximum peak (vol%) in particle size distribution of the positive electrode material powder measured using a laser diffraction method,
   the $D_{50}$ is a particle size at 50% cumulative volume in particle size distribution of the positive electrode material powder,
   the $D_{min}$ is a minimum particle size in particle size distribution of the positive electrode material powder, and
   the $D_{max}$ is a maximum particle size in particle size distribution of the positive electrode material powder.

2. The positive electrode material powder of claim 1, wherein the lithium nickel-based oxide particles are represented by Formula 1 below:

   [Formula 1]   $Li_aNi_bCo_cMn_dM^1_eO_2$

   wherein in Formula 1 above, $M^1$ is at least one selected from the group consisting of Ti, Mg, Al, Zr, Y, Ba, Ca, Sr, W, Ta, Nb, and Mo, where $0.8 \leq a \leq 1.2$, $0.5 \leq b \leq 0.8$, $0 < c \leq 0.3$, $0 < d \leq 0.4$, and $0 \leq e \leq 0.2$.

3. The positive electrode material powder of claim 1, wherein the positive electrode material powder has a BET specific surface area of $0.2\ m^2/g$ to $1.3\ m^2/g$.

4. The positive electrode material powder of claim 1, wherein the $P_0$ is 8 or greater.

5. The positive electrode material powder of claim 1, wherein the $D_{50}$ ranges from 1 $\mu$m to 10 $\mu$m.

6. The positive electrode material powder of claim 1, wherein the $D_{min}$ ranges from 0.75 $\mu$m to 2.0 $\mu$m.

7. The positive electrode material powder of claim 1, wherein the $D_{max}$ ranges from 8 $\mu$m to 18 $\mu$m.

8. The positive electrode material powder of claim 1, wherein an SP value indicated by Equation 2 below ranges from 0.20 to 0.33,

   Equation 2:

   $$SP = \frac{D_{50} - D_{min}}{D_{max} - D_{50}} \ .$$

9. The positive electrode material powder of claim 1, wherein the PCF value ranges from 2.5 to 3.2.

10. The positive electrode material powder of claim 1, wherein a generation rate of fine powder having a particle size of 1 $\mu$m or less is 3 vol% or less when the positive electrode material powder is pressed at 9 tons.

11. A positive electrode comprising the positive electrode material powder of claim 1.

12. A lithium secondary battery comprising:

the positive electrode of claim 11;
a negative electrode;
a separator sandwiched between the positive electrode and the negative electrode; and
an electrolyte.

13. The lithium secondary battery of claim 12, wherein the lithium secondary battery has a charge cut-off voltage of 4.35 V or more during operation.

[FIG. 1]

[FIG. 2]

[FIG. 3]

[FIG. 4]

[FIG. 5]

## INTERNATIONAL SEARCH REPORT

| International application No. |
|---|
| **PCT/KR2024/010314** |

### A. CLASSIFICATION OF SUBJECT MATTER

**H01M 4/525**(2010.01)i; **H01M 4/36**(2006.01)i; **H01M 10/052**(2010.01)i; **C01G 53/00**(2006.01)i; **H01M 4/505**(2010.01)i; **H01M 4/131**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/525(2010.01); H01M 10/052(2010.01); H01M 4/131(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극재 (cathode material), 단일 노듈 (single nodule), PCF (particle cracking factor), 비표면적 (surface area), 미분 (fine powder), 최대 피크 강도 (intensity of max peak)

### C. DOCUMENTS CONSIDERED TO BE RELEVANT

| Category* | Citation of document, with indication, where appropriate, of the relevant passages | Relevant to claim No. |
|---|---|---|
| A | KR 10-2023-0098072 A (LG ENERGY SOLUTION, LTD.) 03 July 2023 (2023-07-03)<br>See abstract; paragraph [0209]; and claims 1, 6, 8, 11 and 14. | 1-13 |
| A | KR 10-2022-0169308 A (L & F CO., LTD.) 27 December 2022 (2022-12-27)<br>See abstract; paragraphs [0039], [0040], [0068]-[0070], [0072], [0073], [0075], [0076], [0078] and [0079]; and claims 1-9. | 1-13 |
| A | KR 10-2023-0033480 A (SAMSUNG SDI CO., LTD.) 08 March 2023 (2023-03-08)<br>See abstract; table 1; and claims 1-4. | 1-13 |
| A | KR 10-2018-0059736 A (POSCO et al.) 05 June 2018 (2018-06-05)<br>See abstract; and claims 1-14. | 1-13 |
| A | JP 2012-212669 A (NGK INSULATORS LTD.) 01 November 2012 (2012-11-01)<br>See abstract; and claims 1-4. | 1-13 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 October 2024** | **27 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/010314**

| Patent document cited in search report | | | Publication date (day/month/year) | Patent family member(s) | | | Publication date (day/month/year) |
|---|---|---|---|---|---|---|---|
| KR | 10-2023-0098072 | A | 03 July 2023 | CN | 118339677 | A | 12 July 2024 |
| | | | | EP | 4425611 | A1 | 04 September 2024 |
| | | | | KR | 10-2641896 | B1 | 29 February 2024 |
| | | | | US | 2023-0207799 | A1 | 29 June 2023 |
| | | | | WO | 2023-121389 | A1 | 29 June 2023 |
| KR | 10-2022-0169308 | A | 27 December 2022 | US | 2024-0282953 | A1 | 22 August 2024 |
| | | | | WO | 2022-265258 | A1 | 22 December 2022 |
| KR | 10-2023-0033480 | A | 08 March 2023 | CN | 115732652 | A | 03 March 2023 |
| | | | | EP | 4144703 | A1 | 08 March 2023 |
| | | | | JP | 2023-036062 | A | 13 March 2023 |
| | | | | JP | 7498233 | B2 | 11 June 2024 |
| | | | | US | 2023-0082796 | A1 | 16 March 2023 |
| KR | 10-2018-0059736 | A | 05 June 2018 | KR | 10-2295296 | B1 | 27 August 2021 |
| JP | 2012-212669 | A | 01 November 2012 | JP | 5855988 | B2 | 09 February 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230092287
- KR 1020230098548
- KR 1020240094050
- KR 1020240094051